# EUROPÄISCHE PATENTANMELDUNG

(11) **EP 3 839 463 A1**
(43) Veröffentlichungstag der Anmeldung: **23.06.2021**
(21) Anmeldenummer: 20208570.0
(22) Anmeldetag: 19.11.2020
(51) Int. Cl.: G01L 5/12, G01M 13/027, G01M 13/04, G01B 21/16, G01M 5/00, B25B 13/50, G01B 5/14

(54) **VERFAHREN UND VORRICHTUNG ZUR MESSUNG EINER AXIALEN VERSCHIEBBARKEIT EINER DREHBAR GELAGERTEN WELLE**

(30) Priorität: 20.12.2019 DE 102019135385
(71) Anmelder: Brandenburgische Technische Universität Cottbus-Senftenberg, 03046 Cottbus (DE)
(72) Erfinder: Schneider, Robert, 01993 Schipkau (DE); Kratzsch, Eric, 15890 Schlaubetal (DE); Fritsch, Tim, 02991 Laubusch (DE); Magister, Jan, 01968 Niemtsch (DE); Rieder, Thomas, 01968 Senftenberg (DE); Simon, Sylvio, Prof., Dr., 03048 Cottbus (DE); Hernschier, Stephan, 01097 Dresden (DE)
(74) Vertreter: Hertin und Partner Rechts- und Patentanwälte PartG mbB

(57) **Zusammenfassung**

Die Erfindung betrifft bevorzugt ein Verfahren zur Messung einer axialen Verschiebbarkeit einer drehbar in einem Gehäuse gelagerten Welle, welches dadurch gekennzeichnet ist, dass das Gehäuse mit der drehbar gelagerten Welle horizontal in einer Klemmvorrichtung eingeklemmt wird. Nach Einstellung der Krafteinleitungsrichtungen auf die Zentralachse der Welle wird zunächst entlang eine ersten Krafteinleitungsrichtung eine erste Kraft eingebracht, bis eine erste Prüfkraft erreicht ist und anschließend in entgegengesetzter Richtung entlang einer zweiten Krafteinleitungsrichtung eine zweite Kraft eingebracht, bis eine zweite Prüfkraft erreicht ist. Während der Ausführung misst das Messgerät die axiale Positionsveränderung der Welle relativ zu dem Gehäuse, um die axiale Verschiebbarkeit der Welle gegenüber dem Gehäuse zu bestimmen. In einem weiteren Aspekt betrifft die Erfindung eine Vorrichtung zur Messung einer axialen Verschiebbarkeit einer drehbar in einem Gehäuse gelagerten Welle, bevorzugt mittels des erfindungsgemäßen Verfahrens.

## Beschreibung

Die Erfindung betrifft bevorzugt ein Verfahren zur Messung einer axialen Verschiebbarkeit einer drehbar in einem Gehäuse gelagerten Welle, welches dadurch gekennzeichnet ist, dass das Gehäuse mit der drehbar gelagerten Welle horizontal in einer Klemmvorrichtung eingeklemmt wird. Nach Einstellung der Krafteinleitungsrichtungen auf die Zentralachse der Welle wird zunächst entlang eine ersten Krafteinleitungsrichtung eine erste Kraft eingebracht, bis eine erste Prüfkraft erreicht ist und anschließend in entgegengesetzter Richtung entlang einer zweiten Krafteinleitungsrichtung eine zweite Kraft eingebracht, bis eine zweite Prüfkraft erreicht ist. Während der Ausführung misst das Messgerät die axiale Positionsveränderung der Welle relativ zu dem Gehäuse, um die axiale Verschiebbarkeit der Welle gegenüber dem Gehäuse zu bestimmen. In einem weiteren Aspekt betrifft die Erfindung eine Vorrichtung zur Messung einer axialen Verschiebbarkeit einer drehbar in einem Gehäuse gelagerten Welle, bevorzugt mittels des erfindungsgemäßen Verfahrens.

### Stand der Technik

Wellen und Achsen werden überall dort eingesetzt, wo Bauteile Rotationsbewegungen ausführen müssen. Die Einsatzmöglichkeiten erfassen beispielsweise Getriebe, Förderanlage, Hebezeuge, Werkzeugmaschinen, Kraft- und Arbeitsmaschinen, Motoren, Kraftfahrzeuge, Turbinen, Textilmaschinen, Baumaschinen usw. Wellen und Achsen werden hierbei aus Rundmaterial oder geschmiedeten Rohlingen hergestellt. Die Werkstoffauswahl hängt dabei vom Einsatzzweck ab.

Essentiell für die relative Rotationsbewegung zwischen Wellen (bzw. Achsen) und der umlaufenden Fläche eines relativ zur Welle (bzw. Achse) rotierenden Maschinenelements ist eine geeignete Lagerung. Lagerungen haben die Aufgabe Kräfte mit möglichst geringem Verschleiß und bei geringer Reibleistung zu übertragen. Dies ist nur durch die Trennung der in Kontakt befindlichen Oberflächen zu erreichen. Es wird durch Wälzlager oder hydrodynamische bzw. hydrostatische Gleitlager bewerkstelligt.

Für die Ausgestaltung einer Lagerung für die speziellen Anforderung des jeweiligen Einsatzgebietes ist die axiale Verschiebbarkeit der Lagerung von hoher Relevanz. Der Einsatz einer falschen Lagerung - mit einer zu hohen oder zu niedrigen axialen Verschiebbarkeit - kann zu erheblichen Schäden an Maschinenteilen führen. Daher muss eine solche Lagerung vor ihrem Einbau und während ihrer Einsatzphase regelmäßig auf ihre axiale Verschiebung hin kontrolliert werden. Die Bestimmung der axialen Verschiebung erfolgt über Messverfahren.

Eine häufig eingesetzte Ausgestaltung einer drehbar in einem Gehäuse gelagerten Welle ist eine dem Fachmann bekannte Tragrolle. Im Stand der Technik wird die axiale Verschiebbarkeit von Tragrollen üblicherweise gemäß der DIN 22112-3 ermittelt. Hierbei wird eine Tragrolle an den Stirnflächen vertikal in einer Prüfeinrichtung eingespannt. Dabei wird nur das Gehäuse eingespannt. Über einen unteren und oberen Hebel wird die gelagerte Welle wechselseitig mit 500 N beansprucht. Zwischen unterem Hebel und der Stirnfläche des Wellenendes befindet sich ein weiterer Hebel, der das Maß der axialen Verschiebung auf eine Messuhr überträgt. Nachteilig an diesem Prüfungsverfahren ist die vertikale Ausrichtung der Tragrolle, wodurch die Wellenmasse über ihre Gewichtskraft einen Einfluss auf die aufgebrachte Prüfkraft ausübt. Die aufgebrachte Prüfkraft ist bei der Messung der axialen Verschiebbarkeit unter Ausführung der DIN-Norm nachteilig zu groß, wenn sie in Richtung der Gewichtskraft der Welle aufgebracht wird. Wenn sie hingegen in entgegengesetzter Richtung zur Gewichtskraft der Welle aufgebracht wird, ist sie nachteilig zu klein. Folglich kann das Messergebnis verfälscht werden. Tragrollen können verschiedene Dimensionen bzw. Ausführungen aufweisen. Zwar ermöglicht die Vorrichtung hierbei eine entsprechende flexible Einstellung, der Einstellaufwand und die damit verbundene Zeit ist jedoch nachteilig groß. Weiterhin wirkt sich die Konstruktion der Messvorrichtung aus DIN 22112-3 nachteilig auf die Messgenauigkeit aus, da es bei Aufbringen der Prüfkraft zu einer Verformung des Gestells kommt, welche über die Messuhr miterfasst wird.

### Aufgabe der Erfindung

Aufgabe der Erfindung ist es somit die Nachteile des Standes der Technik zu beseitigen und ein Verfahren sowie eine Vorrichtung für die Ermittlung einer axialen Verschiebung einer drehbar in einem Gehäuse gelagerten Welle sehr genauen Messergebnissen bereitzustellen, wobei ebenso die Handhabung bzw. Ausführung vereinfacht zu ermöglichen ist.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einem ersten Aspekt betrifft die Erfindung bevorzugt ein Verfahren zur Messung einer axialen Verschiebbarkeit einer drehbar in einem Gehäuse gelagerten Welle, welches dadurch gekennzeichnet ist, dass
a) das Gehäuse mit der drehbar gelagerten Welle horizontal in einer Klemmvorrichtung eingeklemmt wird, wobei ein Messgerät vorliegt, um die axiale Position der Welle relativ zum Gehäuse zu messen,
b) Mittel für eine erste und dazu entgegensetzt ausgerichtete zweite Krafteinleitungsrichtung in Längsrichtung der Welle in Abhängigkeit des Gehäusedurchmessers auf die Zentralachse der Welle eingestellt werden
c) entlang der ersten Krafteinleitungsrichtung eine erste Kraft an einem ersten Ende der Welle eingebracht wird bis eine erste Prüfkraft erreicht ist und
d) im Anschluss in entgegengesetzter Richtung entlang der zweiten Krafteinleitungsrichtung eine zweite Kraft eingebracht wird bis eine zweite Prüfkraft erreicht ist,
wobei das Messgerät die axiale Positionsveränderung der Welle relativ zu dem Gehäuse misst, um die axiale Verschiebbarkeit der Welle gegenüber dem Gehäuse zu bestimmen.

Der Vorteil eines solchen Verfahrens ist, dass die Prüfkraft bzw. die aufgebrachte Kraft nicht durch die Gewichtskraft der Welle beeinflusst wird, wodurch bessere Messergebnisse erzielt werden. Zudem lässt sich vorteilhaft die Welle in einfacher Weise in eine Vorrichtung zur Ausführung des oben benannten Verfahrens einsetzen, wobei insbesondere vorteilhaft überaus schwere, große und unhandliche Wellen verwendet werden können. Überdies hat die Verformung der Welle und des Gestells der Prüfeinrichtung vorteilhaft keinen Einfluss auf das Messverfahren.

Eine Welle ist ein längliches kreiszylinderförmiges Maschinenelement, das zum Weiterleiten von Drehbewegungen und Drehmomenten zwischen von ihr fest verbundenen, d.h. mitrotierenden Teilen Verwendung findet. Ihre drehbare Lagerung erfolgt meistens an zwei Stellen entlang ihrer Ausgestaltung. Die Welle ist erfindungsgemäß bevorzugt um ihre Längsachse drehbar gelagert.

Im Unterschied zu Wellen übertragen Achsen hingegen keine Drehbewegung. Sie drehen sich nicht, sondern stehen fest. Es können jedoch Bauteile drehbar um eine Achse gelagert werden. Im Sinne der Erfindung kann die Welle daher ebenfalls als Achse ausgestaltet sein. Ein Gehäuse kann dementsprechend um die Achse drehbar gelagert sein, während die Achse fest eingespannt ist. Dem Fachmann ist bekannt, dass eine axiale Verschiebbarkeit bei zwei relativ zueinander drehbar gelagerten Bauteilen auftreten kann, infolgedessen ist sie sowohl bei Wellen als auch bei Achsen relevant.

Erfindungsgemäß liegt die horizontale Richtung senkrecht zur Lotrichtung, welche bevorzugt mit der Gravitationsrichtung zusammenfällt. Dem durchschnittlichen Fachmann sind die horizontale Richtung sowie die Lotrichtung bekannt. Dadurch, dass die Welle für die Messung der axialen Verschiebbarkeit erfindungsgemäß horizontal ausgerichtet ist, beeinflusst die Gewichtskraft der Welle das Aufbringen der Prüfkraft nicht. Daraus folgen vorteilhaft bessere Messergebnisse.

Die axiale Verschiebbarkeit einer Welle in einem Gehäuse ist bevorzugt als die Verschiebung in einer axialen Richtung der Welle relativ zu ihrem Gehäuse definiert, wobei die axiale Richtung der Richtung der Längsachse der Welle entspricht. Dem Fachmann ist dies bekannt. Die axiale Verschiebbarkeit wird im Stand der Technik auch als Axialspiel benannt. Die Längsachse der Welle ist dabei insbesondere horizontal ausgerichtet.

Im Sinne der Erfindung wird die axiale Verschiebung der Welle bevorzugt relativ zum Gehäuse über ein Messgerät gemessen. Dieses Messgerät ist bevorzugt ein Wegmessgerät. Dem Fachmann ist dies auch als Distanz-, Abstands- oder Längenmessgerät bekannt. Wie aus den Namen herleitbar, wird anhand dieser Messgeräte ein Weg, eine Distanz, ein Abstand oder eine Länge gemessen. Im weiteren Verlauf des Dokuments ist allgemein mit einem Messgerät stets das in diesem Abschnitt erwähnte Messgerät zur Weg-, Distanz-, Abstand- oder eine Längenmessung gemeint. Alle weiteren vorkommenden Messgeräte werden anderweitig, insbesondere spezifiziert (wie bspw. Kraftmessgerät - s. weiter unten) benannt.

Ein Wellengehäuse ist dem Fachmann ebenfalls bekannt und kann verschiedenartig ausgestaltet sein. Erfindungsgemäß werden solche Wellen-Gehäuse-Konstruktionen bevorzugt als Tragrollen bezeichnet. Diese kommen bspw. als Trag- und Führungselemente in Gurtförderanlagen vor. Die Wellen-Gehäuse-Konstruktionen sind jedoch nicht nur auf Tragrollen beschränkt. Zweckmäßigerweise können neben Tragrollen ebenfalls ähnlich aufgebaute Maschinenelemente, wie z.B. Elektromotoren mit gelagertem Rotor in einem Stator, als Wellen-Gehäuse-Konstruktionen bezeichnet werden. Im Sinne der Erfindung ist ein Gehäuse bevorzugt ein Bauteil, welches die Welle umhüllt. Das Gehäuse umfasst dabei eine der Welle zugewandte innenliegende Fläche und eine der Welle abgewandte außenliegende Fläche. Die außenliegende Fläche kann sich in ihrer Form von der innenliegen Fläche unterscheiden. Die drehbar gelagerte Welle und ihr Gehäuse sind im vorliegenden Dokument auch als Prüfkörper bezeichnet.

Das Gehäuse der Welle ist bevorzugt in seiner Außenform kreiszylinderförmig ausgestaltet, wobei die Außenform des Gehäuses eine Mantelfläche und zwei Stirnseiten umfasst. Die beiden Stirnseiten definieren die beiden Seitenflächen bzw. die Grundflächen des Zylinders.

Im Sinne der Erfindung ist eine Klemmvorrichtung bevorzugt eine Haltevorrichtung. Diese ist bevorzugt so ausgestaltet, dass sie form- und/oder kraftschlüssig einen Körper positionsfest halten kann. Die Klemmvorrichtung spannt bevorzugt das Gehäuse stirnseitig ein. Der Vorteil eines stirnseitig eingeklemmten Gehäuses liegt darin, dass das Gehäuse formschlüssig eingespannt ist, da die Prüfkraft entlang der Längsachse der des Prüfkörpers aufgebracht wird. Das formschlüssige Einspannen wirkt sich vorteilhaft materialschonend gegenüber einem kraftschlüssigen Einspannen aus.

In einer weiteren bevorzugten Ausführungsform weist die Welle des Prüfkörpers mindestens einen Achszapfen auf. Ein Achszapfen ist ein Teilabschnitt der Welle, welcher an einem Ende der Welle als Absatz ausgestaltet ist. Die Welle kann auch zwei Achszapfen umfassen, die jeweils an einem der beiden Enden ausgestaltet sind. Der Achszapfen weist einen im Vergleich zur restlichen Welle geringeren Durchmesser auf. Im Stand der Technik ist ein Achszapfen auch als Achsstummel bekannt. Ein Absatz dient vorteilhaft als axialer Anschlag für gleitend gelagerte Bauteile oder als Montageanschlag für Wälzlager-Innenringe bei einer Wälzlagerung.

Eine Krafteinleitungsrichtung ist im Sinne der Erfindung die Richtung, in welche eine an einem Körper angreifende Kraft hin ausgerichtet wird. Überdies ist die Krafteinleitungsrichtung erfindungsgemäß über Mittel einstellbar, wobei die Krafteinleitungsrichtung besonders bevorzugt parallel bzw. in Richtung der Längsachse der Welle ausgestaltet ist. Vorteilhaft wird dadurch nur eine Axiallast auf die Lager ausgeübt, wodurch genauere Messergebisse erfasst werden können und wodurch der Prüfkörper vorteilhaft weniger verschleißt. Eine Axiallast ist dem Fachmann bekannt.

Die Krafteinleitungsrichtung ist bevorzugt über die Mittel so eingestellt, dass die einbringende Kraft genau auf der Symmetrieachse bzw. Zentralachse in Längsrichtung der Welle am Achszapfen angreift. Die Höhenposition der Zentralachse eines Prüfkörpers ist abhängig von seiner Dimensionierung, insbesondere von der Ausgestaltung des Gehäuses. Daher wird erfindungsgemäß die Krafteinleitungsrichtung bevorzugt in Abhängigkeit des Gehäusedurchmessers eingestellt.

Mittel für eine Kraftleitungsrichtung können erfindungsgemäß alle dem Fachmann bekannten kraftleitenden Bauteile sein, die eine definierte Richtung vorgeben wie bspw. ein Stab bzw. Balken, eine Feder, ein Seil oder eine Kette. Bevorzugt werden Stäbe bzw. Balken und/oder eine Zug- und/oder Druckfedern für die Ausgestaltung der Mittel, die eine Kraftleitungsrichtung definieren, verwendet. Ein Balken kann vorteilhaft eine Kraft entlang seiner Längsachse (Zugkräfte sowie Druckkräfte) leiten. Je nach Ausgestaltung der Feder weist sie ebenso ein solches vorteilhaftes Verhalten auf. So kann beispielweise eine Schraubenfeder sowohl auf Druck wie auch auf Zug belastet werden.

Erfindungsgemäß ist die Prüfkraft bevorzugt eine vordefinierte Kraft. Diese Prüfkraft ist für jede Ausführung des erfindungsgemäßen Verfahrens bevorzugt im Wesentlichen gleich und entspricht bevorzugt 100 N bis 1000 N, bevorzugt 300 N bis 800 N, besonders bevorzugt 400 N bis 600 N. Durch eine immer im Wesentlichen gleich aufgebrachte Prüfkraft wird, vorteilhafterweise eine Vergleichbarkeit zwischen unterschiedlichen Prüfkörpern ermöglicht. Zudem stellt eine vordefinierte Prüfkraft vorteilhaft sicher, dass die eingebrachten Kräfte einen Schwellenwert nicht überschreiten. Das Überschreiten der Prüfkraft bzw. eines Schwellenwertes würde unter Umständen Schäden am Prüfkörper hervorrufen.

Der Betrag der Höhe der Prüfkraft dient zum Überwinden von Reibungswiderstanden innerhalb der zu prüfenden Objekte (z.B. Fettfüllung innerhalb der Abdichtungen und Lager, Verschiebung in den Lagern selbst, usw.). Die Prüfkraft kann demnach auch von den oben genannten Werten abweichen. Eine elastische Verformung der Bauteile findet nicht statt und wird durch den innovativen Aufbau der erfindungsgemäßen Vorrichtung (Prüfeinrichtung) unterbunden.

Über ein Kraftmessgerät wird bevorzugt die aufgebrachte erste sowie zweite Kraft aufgenommen und über eine Steuereinheit mit der vordefinierten Prüfkraft abgeglichen. Erfindungsgemäß ist das Kraftmessgerät bevorzugt eine Kraftmessdose bzw. ein Kraftaufnehmer. Mit einem Kraftaufnehmer wird eine Kraft gemessen, die auf einen Sensor wirkt. Meist können durch elastische Verformung sowohl Zug- als auch Druckkräfte gemessen werden. Bevorzugt wird ein Kraftaufnehmer ausgesucht aus einer Gruppe umfassend: Federkörper-Kraftaufnehmer, Piezo-Kraftaufnehmer, Kraftaufnehmer mit schwingenden Elementen, Elektrodynamische Kraftaufnehmer, Resistive Kraftaufnehmer. Dem Fachmann sind benannte Kraftmessdosen bekannt. Vorteilhafterweise sind solche Kraftmessgeräte sehr kompakt und ermöglichen dabei präzise Messungen.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

In einer weiteren bevorzugten Ausführungsform der Erfindung ist das Verfahren dadurch gekennzeichnet, dass die erste Prüfkraft und die zweite Prüfkraft dem Betrage nach gleich sind. Die Wiederholbarkeit und Vergleichbarkeit von Messungen in Bezug auf die axiale Verschiebung ist durch eine immer gleich definierte Prüfkraft vorteilhaft besser zu erreichen.

Dem durchschnittlichen Fachmann ist hierbei klar, dass der Ausdruck "dem Betrage nach gleich", so interpretiert werden kann, dass die Kräfte im Wesentlichen dem Betrage nach gleich sind.

In einer weiteren bevorzugten Ausführungsform der Erfindung ist das Verfahren dadurch gekennzeichnet, dass bei Erreichen der ersten Prüfkraft das Messgerät auf die vorliegende axiale Position der Welle relativ zum Gehäuse genullt wird und die axiale Verschiebbarkeit der Welle gegenüber dem Gehäuse als absoluter Wert durch das Messgerät anhand der axialen Positionsveränderung bis zum Erreichen der zweiten Prüfkraft ermittelt wird. Vorteilhafterweise müssen durch das Nullen des Messgeräts keine Rechnungen oder Differenzen der Messwerte gebildet werden. Anhand des Nullens wird die axiale Verschiebbarkeit relativ zum Nullpunkt als absoluter Messwert ermittelt.

Erfindungsgemäß ist das Nullen eines Messgeräts dadurch definiert, dass das Messgerät neu ausgerichtet wird und in dem Fall auf null zurückgestellt wird. Hierdurch wird ein neuer Bezugspunkt des Messgeräts definiert.

In einer weiteren bevorzugten Ausführungsform der Erfindung ist das Verfahren dadurch gekennzeichnet, dass die axiale Verschiebbarkeit der Welle gegenüber dem Gehäuse aus der Differenz der axialen Positionsveränderung der Welle relativ zum Gehäuse bei Erreichen der ersten Prüfkraft und der axialen Positionsveränderung der Welle relativ zum Gehäuse bei Erreichen der zweiten Prüfkraft ermittelt wird. In diesem Fall muss das Messgerät nicht genullt werden. Vorteilhaft wird bei schwer zugänglich Messgeräten ein zeitlicher Mehraufwand vermieden. Auch bei Messgeräten, die mehrere Verfahrensschritte für das Nullen beanspruchen, wird der Mehraufwand durch diese Ausführungsform erheblich verringert.

Erfindungsgemäß wird der Messwert der Positionsveränderung bei Erreichen der ersten Prüfkraft gesichert und anschließend mit dem Messwert nach Erreichen der zweiten Prüfkraft verglichen. Anhand einer Differenz beider Werte wird die axiale Verschiebung ermittelt. Das Sichern der Messwerte kann manuell über einen Nutzer oder aber durch ein automatisches Speichern in einer Speichereinheit geschehen.

In einer weiteren bevorzugten Ausführungsform der Erfindung ist das Verfahren dadurch gekennzeichnet, dass die Welle über mindestens ein Wälzlager in dem Gehäuse gelagert vorliegt. Wälzlager weisen eine vorteilhaft geringere (Anlauf-) Reibung auf. Zudem weisen Wälzlager vorteilhaft genormte Einheiten auf, welche eine leichte Auswahl für die jeweilige Belastung und eine einfache Montage gewährleisten. Ein weiterer Vorteil ist die hohe Genauigkeit von Wälzlagern sowie die einfache Schmierstoffversorgung und die überraschend geringen Schmierstoffmengen, die benötigt werden. Zudem sind Wälzlager vorteilhafterweise auch für Mischreibungsbetriebe geeignet und weisen eine geringe Wärmeentwicklung auf.

Im Sinne der Erfindung ist ein Wälzlager bevorzugt ein einbaufertiges Maschinenelement. Ein Wälzlager besteht bevorzugt aus einem Außenring, einem Innenring und Wälzkörpern, die in einem Käfig geführt werden. Die Lastübertragung kann dabei radial, axial oder schräg (radial und axial) erfolgen. Die erfindungsgemäßen Bauarten der Wälzlager sind bevorzugt ausgewählt aus einer Gruppe umfassend. Radialkugellager, Schrägkugellager, Pendelkugellager, Zylinderrollenlager, Nadellager, Kegelrollenlager, Tonnenlager, Pendelrollenlager. Dem Fachmann sind alle benannten Wälzlager bekannt.

Die Welle kann über bevorzugt mindestens ein Lager im Gehäuse gelagert werden. Besonders bevorzugt wird die Welle über zwei Lager im Gehäuse gelagert. Die maximale Lageranzahl ist jedoch nicht begrenzt.

In einer weiteren bevorzugten Ausführungsform der Erfindung ist die Welle durch mindestens ein Gleitlager in einem Gehäuse drehbar gelagert. Bei Gleitlagern gleiten die beiden sich relativ zueinander bewegenden Teile gegen den durch Gleitreibung verursachten Widerstand aufeinander ab. Dieser kann niedrig gehalten werden durch Wahl einer reibungsarmen Materialpaarung, durch Schmierung oder durch Erzeugen eines Schmierfilms (Vollschmierung), der die beiden Kontaktflächen voneinander trennt. Vorteilhaft sind Gleitlager wartungsarm. Überdies weisen Gleitlager vorteilhaft einen geringen Geräuschpegel auf. Vorteilhaft sind Gleitlager unempfindlich gegen Staubzutritt und Erschütterungen sowie sehr gut geeignet für hohe Drehzahlen.

In einer weiteren bevorzugten Ausführungsform der Erfindung ist das Verfahren dadurch gekennzeichnet, dass das Messgerät eine Messuhr ist, bevorzugt eine Messuhr mit einem Stativ, wobei das Stativ an dem Gehäuse befestigt wird. Messuhren sind vorteilhafterweise günstig, robust und trotzdem sehr genau.

Eine Messuhr ist ein mechanisches Messgerät zum Messen von Längen oder Längendifferenzen. Sie wird zum Beispiel für Vergleichs-, Ebenheits-, Lage- oder Rundlaufmessungen eingesetzt. Die Funktion und der Aufbau einer Messuhr werden bevorzugt durch die DIN-Verordnung 878 normiert und sind dem Fachmann bekannt.

Das Stativ der Messuhr ist bevorzugt über Anbringungsmittel am Gehäuse befestigt. Die Anbringungsmittel können bevorzugt Klebverbindungen, Nietverbindungen oder Schraubverbindungen umfassen. Besonders bevorzugt sind die Anbringungsmittel durch einen Magneten ausgestaltet. Die durch den Magneten aufgebrachte Kraft lässt das Stativ am Gehäuse des Prüfkörpers haften. Der Magnet lässt sich bevorzugt ein- und ausschalten. Vorteilhaft kann die Messuhr mit dem Stativ dadurch werkzeuglos und ohne Beschädigungen angebracht sowie entfernt werden.

In einer weiteren bevorzugten Ausführungsform ist das Messgerät ausgesucht aus der Gruppe umfassend: Inkrementalgeber, Faseroptische Wegsensor, Videoextensometer und Laserentfernungsmesser.

In einer weiteren bevorzugten Ausgestaltung ist das Messgerät und/oder dessen Befestigung dem Prüfkörper bzw. dem Gehäuse beabstandet und damit nicht am Gehäuse des Prüfkörpers angebracht. Der Vorteil einer solchen Ausgestaltung ist, dass sich das Messgerät positionsfest an seiner gleichen Stelle befinden kann, trotz Wechsel von Prüfkörpern. Das Messgerät muss nicht neu kalibriert werden und muss vorteilhaft auch nicht bei einem Wechsel von Prüfkörpern neu angebracht oder entfernt werden.

In einer weiteren bevorzugten Ausführungsform der Erfindung ist das Verfahren dadurch gekennzeichnet, dass die erste und/oder zweite Kraft mechanisch, hydraulisch, magnetisch, elektrisch und/oder pneumatisch eingebracht wird.

Erfindungsgemäß wird das mechanische Einbringen einer Kraft bevorzugt durch die Übertragung von Bewegungen, Kräften und Drehmomenten durch starre Bauteile (Balken, Gelenkstäbe) definiert. Der Vorteil an einem mechanischen Einbringen der Kräfte ist die nicht aufwändige und unkomplexe Ausgestaltung der Bauteile. Dem Fachmann ist das mechanische Einbringen von Kräften bekannt.

In der Hydraulik erfolgt die Leistungsübertragung durch eine Hydraulikflüssigkeit. Bevorzugt ist die Flüssigkeit ein Mineralöl. Bei hydraulisch eingebrachten Kräften wird bevorzugt mechanische Leistung durch eine Pumpe in hydraulische Leistung umgewandelt. Diese Leistung wird anschließend wieder in mechanische Leistung umgeformt. Dem Fachmann ist ein solches Prinzip bekannt. Der Vorteil einer solchen hydraulischen Anordnung ist, dass wesentlich höhere Kräfte übertragen werden können und sehr gleichförmige und exakte Kraftbewegungen möglich sind, da die Verdichtung der Hydraulik-Flüssigkeit sehr gering ist.

In einer weiteren bevorzugten Alternative wird anstatt einer Hydraulik-Flüssigkeit Druckluft verwendet. Hierunter versteht der Fachmann pneumatisch eingebrachte Kräfte und dem Fachmann ist eine solche Anordnung bekannt. Diese Anordnung erlaubt vorteilhaft ein leistungsloses Halten bei einer konstanten Kraft. Überdies ist die Anordnung vorteilhaft robust gegen Überlast und unempfindlich gegen Temperaturschwankungen.

In einer weiteren Ausführungsform der Erfindung wird die Kraft bevorzugt magnetisch eingebracht. Erfindungsgemäß kann beispielweise ein ferromagnetisch ausgestaltendes Wellenende über ein an einem Gestell befestigten Magneten angezogen werden. Vorteilhaft wirkt eine Kraft am Wellenende in Krafteinleitungsrichtung, ohne dass die Welle in Kontakt, ausgenommen der Lagerung, mit einem Bauteil steht.

In einer anderen Variante von magnetisch eingebrachten Kräften ist das Wellenende mit einem Dauermagneten ausgestaltet. Das anliegende Gestell weist einen Elektromagneten auf. Je nach Polausgestaltung des Elektromagneten wird das Wellenende hierbei angezogen oder abgestoßen. Der Vorteil einer solchen Ausgestaltung ist das berührungslose Einbringen einer Kraft sowie, dass die Kraft bevorzugt nur von einer Wellenseite in den Prüfkörper eingebracht wird. Dem Fachmann sind Dauermagneten sowie Elektromagneten bekannt.

In einer weiteren Ausführungsform der Erfindung wird eine Kraft bevorzugt elektrisch eingebracht. Ein Generator erzeugt bevorzugt Strom, welche in eine mechanische Bewegungsform gewandelt wird und wodurch eine Kraft in Kraftleitungsrichtung an der Welle angreift. Die Umwandlung der Bewegungsform kann bspw. über einen Elektromotor, einem Elektromagneten erfolgen.

In einer weiteren bevorzugten Ausführungsform der Erfindung ist das Verfahren dadurch gekennzeichnet, dass die erste und zweite Krafteinleitungsrichtung durch eine Verbindung des ersten Endes der Welle zu einem Gestell festgelegt wird, wobei das Gehäuse in der Klemmvorrichtung entlang der Längsrichtung der Welle mittels einer Verfahreinrichtung verschiebbar ist, und die erste Prüfkraft sowie die zweite Prüfkraft durch eine Verschiebung des Gehäuses gegenüber dem Gestell, und der dementsprechenden Zug- und Druckbelastung, an dem ersten Ende der Welle aufgebracht wird. Es hat sich vorteilhaft gezeigt, dass eine solche Verfahrensanordnung sehr kompakt ausgestattet werden kann, da nur eine Verbindung an einer Seite des Prüfkörpers mit einem Gestell nötig ist. Wie weiter unten im Detail beschrieben ist das Verfahren auch anders herum denkbar und möglich, d.h. die Welle wird verfahren und Gehäuse fixiert. Die beschrieben Ausführungsform vermeidet vorteilhaft eine Gestell-Verformung und des damit einhergehenden Messfehlers.

Erfindungsgemäß ist die Verbindung eines ersten Endes der Welle zu einem Gestell bevorzugt steif bzw. starr ausgestaltet. Bevorzugt handelt es sich um einen Stab oder Balken. Ein Balken zeigt vorteilhaft besonders verschleißfeste Eigenschaften auf. Zudem kann ein Balken vorteilhaft Druck und Zugkräfte aufnehmen. Die Verbindung eines Wellenendes zu einem Gestell definiert bevorzugt die Kraftleitungsrichtung.

Eine Verbindung ermöglicht dabei bevorzugt die Definition von zwei Krafteinleitungsrichtungen. So kann ein starrer Balken sowohl Druck- als auch Zugkräfte aufnehmen, wobei beide Kräfte in entgegengesetzter Richtung ausgerichtet sind.

In einer weiteren bevorzugten Ausführungsform ist die Verbindung zum Gestell elastisch ausgestaltet. Ein elastisches Element ist erfindungsgemäß bevorzugt so definiert, dass ein Element besonders bevorzugt ein Körper bzw. ein Werkstoff unter Krafteinwirkung seine Form verändert und bei Wegfall der einwirkenden Kraft in die Ursprungsform zurückkehrt.

Durch Verwendung eines elastischen Elementes wird bevorzugt durch eine Verschiebung des Gehäuses gegenüber dem Gestell die Kraft im Wesentlichen linear mit dem Abstand erhöht bis die gewünschte Prüfkraft eingestellt wird. Die Federkonstante des elastischen Elementes kann bevorzugt gewählt werden, um eine Prüfkraft bei einem gewünschten Verfahrweg zu gewährleisten. Um beispielsweise eine Prüfkraft von 100 N bis 1000 N bei einer Verschiebung von 1 mm zu gewährleisten, kann es bevorzugt sein ein elastisches Element mit einer Federkonstanten zwischen 100 und 1000 N/mm zu wählen. Sollen dieselben Prüfkräfte bei einem längeren Verfahrweg von 10 mm erreicht werden, kann es bevorzugt sein, ein elastisches Element mit einer entsprechend um den Faktor 10 geringeren Federkonstante von 10 und 100 N/mm zu wählen. Elastische Elemente erlauben mithin die genaue Einstellung eines (bevorzugt längeren) Verfahrweges, wodurch die Sensitivität bzw. Messgenauigkeit verbessert wird.

Die elastischen Eigenschaften des elastischen Elements können bevorzugt durch Form, Struktur und/oder Materialwahl gewährleistet werden. Beispielsweise kann das elastische Element eine Federstruktur umfassen oder ganz oder teilweise aus elastische Materialien gefertigt sein.

In einer bevorzugten Ausgestaltung ist das elastische Element als ein blockförmiger Elastomer ausgestaltet. Im Sinne der Erfindung bezeichnet ein Elastomer bevorzugt ein Kunststoff, dessen besondere Eigenschaft seine Gummielastizität ist. Dem Fachmann ist bekannt, dass es sich um einen Kunststoff handelt, dessen Glasübergangspunkt unterhalb der Einsatztemperatur liegt. Ein Elastomer ist daher formfest, aber vorteilhaft elastisch und findet nach einer Verformung wieder in ihre ursprüngliche Gestalt zurück. Beispielhaft sei natürliche oder synthetische Kautschuk genannt, wobei der Fachmann eine Vielzahl weitere Elastomere kennt.

In einer weiteren bevorzugten Ausgestaltung ist das elastische Element durch eine Feder ausgestaltet. Die Steifigkeit einer Feder lässt sich vorteilhaft besonders gut berechnen. In einer bevorzugten Ausgestaltung der Feder ist diese eine Zug- und/oder Druckfeder ausgewählt aus einer der Gruppe bestehend aus: Schraubenfeder, Wellenfeder und/oder Tellerfedern. Besonders bevorzugt ist die Feder dabei als Schraubenfeder ausgestaltet. Dem durchschnittlichen Fachmann sind verschiedene Federformen bekannt.

In einer bevorzugten Alternative der Verbindung ist diese ausgestaltet aus einer Kombination von beschriebenen elastischen Elementen sowie steif bzw. starr ausgestalteten Elementen, wie einem Balken. Diese Elemente sind erfindungsgemäß bevorzugt in Reihe hintereinander verbunden.

In einer weiteren bevorzugten Ausgestaltung umfasst die Verbindung zwischen Prüfkörper und Gestell eine Kraftmessdose. Vorteilhaft kann dadurch die aufgebrachte Kraft gemessen werden.

In einer weiteren bevorzugten Ausgestaltung kann die Verbindung neben einem kraftleitenden Bauteil bevorzugt ein kraftaufbringendes bzw. energieaufbringendes Bauteil umfassen, wie einen Motor oder einen Generator.

In einer bevorzugten Ausführungsform umfasst der Achszapfen an den Enden der Welle eine Querbohrung. Das Verbindungselement zwischen Prüfkörper und Gestell weist hingegen an einem Ende eine sogenannte Gabel auf. Die Gabel der Verbindung ist ebenfalls mit Bohrungen ausgestaltet, sodass bei einem Ineinandergreifen von Gabel und Achszapfen ein Bolzen durch die Bohrungen geführt werden kann und dadurch eine formschlüssige Verbindung bereitgestellt wird. Eine solche Bolzenverbindung, sowie insbesondere eine in dem Zusammenhang erwähnte Gabel, ist dem Fachmann bekannt. Vorteilhaft kann eine solche Verbindung mit wenig Aufwand gelöst werden, sodass das Wechseln von verschiedenen Prüfkörpern in schneller Zeit bewerkstelligt werden kann.

Die Verbindung zwischen Welle und Gestell kann auch mit anderen Befestigungsformen an der Welle angebracht sein. So kann die Befestigung durch Klebverbindungen, Nietverbindungen, Schraubverbindungen oder eine Klemmvorrichtung ausgestaltet sein.

Im Sinne der Erfindung weist eine Verfahreinrichtung bevorzugt einen Schlitten und Schienen auf. In einer bevorzugten Ausgestaltung ist die Klemmvorrichtung über den Schlitten in einem Freiheitsgrad beweglich auf den Schienen der Verfahreinrichtung gelagert. Zwischen Schlitten und Schienen ist relativ zueinander eine Verschiebung möglich. So wird in einer Ausführungsform bevorzugt der Schlitten, auf dem die Klemmvorrichtung angebracht ist, auf den Schienen bewegt.

In einer bevorzugten Ausführungsform wird die Bewegung des Schlittens durch einen Linearantrieb aufgebracht. Der Linearantrieb liefert vorteilhaft eine gleichmäßige und genaue Bewegung, sodass die Prüfkraft der Anordnung in keinem Fall überschritten wird.

In einer bevorzugten Ausgestaltung der Erfindung wird die Bewegung durch eine menschlich aufgebrachte Kraft, insbesondere durch eine Hand bereitgestellt. Dies ermöglicht vorteilhaft den Verzicht einer Bauteilkomponente, wie den oben beschriebenen Linearmotor, und bewirkt dadurch geringere Kosten.

Dadurch, dass die Klemmvorrichtung nur das Gehäuse des Prüfkörpers einspannt und die Welle bspw. über die Bolzenverbindung fest mit dem Gestell verbunden bzw. fixiert ist, entsteht je nach Verfahrrichtung zwischen Schlitten und Schienen eine Zug- oder Druckbelastung am Ende der Welle bzw. an dem Verbindungselement. Der Vorteil einer solchen Anordnung liegt darin, dass zwei Krafteinleitungsrichtungen über nur ein Verbindungselement zwischen Gestell und Prüfkörper eingebracht werden. Dadurch kann der Messaufbau vorteilhaft sehr kompakt ausgestaltet werden.

In einer bevorzugte Ausführungsform wird diese Belastung bevorzugt durch die eingebaute Kraftmessdose gemessen. Die Verfahrbewegung wird dabei solange ausgeführt, bis die Druck- oder Zugbelastung die Prüfkraft erreicht. Die Verfahrbewegung beträgt bevorzugt einen Weg 0,1 mm und 10 mm, bevorzugt 0,5 mm und 10 mm, besonders bevorzugt 1 mm und 5 mm.

In einer weiteren bevorzugten Ausführungsform der Erfindung ist das Verfahren dadurch gekennzeichnet, dass die erste Krafteinleitungsrichtung durch eine zentralaxiale Verbindung des ersten Endes der Welle mit einem ersten Krafteinleitungspunkt eines Gestells und die zweite Krafteinleitungsrichtung durch eine zentralaxiale Verbindung des zweiten Endes der Welle mit einem zweiten Krafteinleitungspunkt des Gestells festgelegt wird, wobei das Gehäuse in der Klemmvorrichtung gegenüber dem Gestell fixierbar vorliegt und die erste Prüfkraft sowie die zweite Prüfkraft durch die Aufbringen der Prüfkraft über die jeweiligen Krafteinleitungspunkte des Gestells erfolgt. Vorteilhaft ist dadurch kein Schlitten-Schienensystem nötig, wodurch die Prüfkraft genauer aufgebracht werden kann.

Die in die eingebrachten Kräfte in die jeweiligen Enden der Welle gestalten sich bevorzugt als Druckkräfte aus. Druckkräfte lassen sich vorteilhaft simpler in die Welle einbringen.

Der Krafteinleitungspunkt ist im Sinne der Erfindung der Punkt, an dem die Verbindung im Gestell fest eingespannt gelagert ist. Wenn eine Kraft auf den Prüfkörper aufgebracht wird, wirkt durch das Newtonsche Gesetz ebenso eine Kraft auf das Gestell der Vorrichtung. Diese Kraft wird als Gegenkraft im Krafteinleitungspunkt in das Gestell geleitet.

Erfindungsgemäß ist eine zentralaxiale Verbindung so ausgestaltet, dass die Verbindung zwischen Gestell und Welle an der Symmetrieachse bzw. Zentralachse der Welle angreift. Die Verbindung kann neben einem kraftleitenden Bauteil bevorzugt ein Kraft aufbringendes Bauteil umfassen, wie einen Motor. Durch Kraftumwandlung wird die Kraft dementsprechend mechanisch, hydraulisch, pneumatisch über die Verbindung in den Prüfkörper am eingebracht. Eine Gegenkraft wird entsprechend ins Gestell am Krafteinleitungspunkt eingebracht.

In einer bevorzugten Ausgestaltung der Erfindung liegt die Klemmvorrichtung fixierbar gegenüber dem Gestell vor. Über eine Festlagerung ist die Klemmvorrichtung unbeweglich im Gestell angebracht. Das Aufbringen einer Kraft am ersten sowie zweiten Wellenende führt zu einer axialen Verschiebung der Welle relativ zum Gehäuse.

In einer weiteren bevorzugten Ausführungsform der Erfindung ist das Verfahren dadurch gekennzeichnet, dass die erste und/oder zweite Kraft über einen Hebelmechanismus eingebracht werden. Der Vorteil eines Hebelmechanismus' ist die unkomplizierte Ausgestaltung und einfache Berechnung der aufgebrachten Kraft.

Ein Hebelmechanismus im Sinne der Erfindung ist bevorzugt ein mechanisches Getriebe. Mechanische Getriebe übertagen Bewegungen, Kräfte und Drehmomente durch starre Bauteile wie bspw. Zahnräder, Ketten, Riemen oder Gelenkstäbe. Erfindungsgemäß ist der Hebelmechanismus bevorzugt durch Gelenkstäbe ausgestaltet. Jeder Stab ist dabei als ein Getriebeglied definiert. Insbesondere wird bei einem Hebelmechanismus eine Kraft umgelenkt, sodass die in den Prüfkörper eingebrachte Kraft die bevorzugte Krafteinleitungsrichtung (parallel zur Längsachse des Prüfkörpers) aufweist.

In einem weiteren Aspekt betrifft die Erfindung bevorzugt eine Vorrichtung zur Messung einer axialen Verschiebbarkeit einer drehbar in einem Gehäuse gelagerten Welle, bevorzugt zur Ausführung des beschriebenen Verfahren, welche dadurch gekennzeichnet, dass die Vorrichtung eine Klemmvorrichtung für eine horizontale Lagerung des Gehäuses mit der drehbar gelagerten Welle und ein Messgerät zur Bestimmung der axialen Position der Welle relativ zum Gehäuse aufweist, wobei die Vorrichtung Mittel umfasst zur Einbringung einer ersten und dazu entgegensetzt ausgerichteten zweiten Krafteinleitungsrichtung auf die Zentralachse der Welle, welche in Abhängigkeit des Gehäusedurchmessers einstellbar sind.

Die Vorrichtung weist eine vorteilhafte Kompaktheit auf und ist trotzdem für eine Vielzahl von unterschiedlich ausgestalteten Wellen- bzw. Gehäusegrößen verwendbar. Vorteilhaft können die oben aufgeführten Verfahren an der Vorrichtung ausgeführt bzw. die Vorrichtung in dem Verfahren verwandt werden. Der Fachmann erkennt, dass bevorzugte Ausführungsformen, welche im Zusammenhang mit dem Verfahren (oder der Vorrichtung) beschrieben wurden gleichermaßen für die Vorrichtung (oder das Verfahren) bevorzugt sind und zu den beschriebenen Vorteilen führen. Insbesondere wird die Messung der Verformung in der bevorzugten Vorrichtung (Prüfeinrichtung) durch ihren konstruktiven Aufbau bewusst vermieden, da die Verformung als Messfehler in das Gesamtergebnis eingehen würde.

Die Messung des Axialspiels ist von Messungen der axialen Steifigkeit (Verformung) zu unterscheiden. Bei der Messung einer axialen Steifigkeit wird üblicherweise eine Drehbewegung auf das Messobjekt (bspw. eine Welle, Spindel) eingebracht, wodurch sich dynamische Effekte innerhalb der Lagerung ergeben. Diese werden insbesondere aufgrund eines betriebsnotwendigen Schmierstoffs und dessen Viskosität hervorgerufen. Weiterhin werden üblicherweise bei der Messung der dynamischen Steifigkeit Lauftoleranzen innerhalb der Lagerung der Welle miterfasst und im Gesamtergebnis mit ausgegeben. Für die erfindungsgemäße Vorrichtung (Prüfeinrichtung) stellen diese im Ergebnis erfassten Differenzen hingegen durch Schmierfilm und Lauftoleranz einen unbedingt zu vermeidenden Messfehler dar und sind unerwünscht und zu vermeiden.

Erfindungsgemäß ist die Klemmvorrichtung bevorzugt so ausgestaltet, dass die in einem Gehäuse drehbar gelagerte Welle an beiden Stirnseiten durch jeweils eine Klemmbacke über das Gehäuse festgespannt wird. Der Vorteil eines stirnseitig eingeklemmten Gehäuses liegt darin, dass das Gehäuse formschlüssig eingespannt ist, da die Kräfte entlang der Längsachse der des Prüfkörpers aufgebracht werden. Die beschriebene Klemmvorrichtung ist dabei keine einfache "handwerkliche" Maßnahme, sondern für die Erzielung der gewünschten Messergebnisse entscheidend.

In einer weiteren bevorzugten Ausführungsform ist der Prüfkörper kraftschlüssig über Spanngurte, die quer zur Längsseite des Prüfkörpers liegen, festgeklemmt. In einer weiteren bevorzugten Ausgestaltung bringt ein Magnet die nötige Haltekraft auf, sodass das Gehäuse des Prüfkörpers kraftschlüssig mit einem Gestell verbunden ist. Beide kraftschlüssigen Verbindungen sind vorteilhaft sehr schnell und ohne großen Aufwand konstruierbar.

In einer weiteren bevorzugten Ausführungsform umfasst die Vorrichtung eine Steuereinheit und eine Kraftmessdose. Die Steuereinheit weist bevorzugt einen Mikrocontroller auf. Anhand der Kraftmessdose wird die auf den Prüfkörper aufgebrachte Kraft gemessen und bevorzugt kontinuierlich durch die Steuereinheit mit der Prüfkraft abgeglichen. Sobald die Prüfkraft oder ein Schwellenwert erreicht ist, führt die Steuereinheit einen nächsten Verfahrensschritt durch. Der nächste Verfahrensschritt ist bevorzugt das Aufbringen einer zweiten Kraft in die entgegensetzte Richtung der vorher aufgebrachten ersten Kraft. Bevorzugt weist die Steuereinheit eine Lampe (bevorzugt ein LED-Leuchtmittel) auf, welche bei Erreichen der Prüfkraft aufleuchtet, sodass ein Nutzer visuell erkennt, dass eine Prüfkraft erreicht ist.

In einer weiteren Ausführungsform wird die Prüfkraft durch eine Verschiebung des Gehäuses gegenüber der Welle, und der dementsprechenden Zug- und Druckbelastung, an dem ersten Ende der Welle aufgebracht. Nach Erreichen der ersten Prüfkraft erfolgt das Beenden der Verfahrbewegung des Gehäuses und eine Lampe leuchtet zur Signalisierung der Erreichung der Prüfkraft auf. Anschließend wird das Messgerät "genullt". In einem nächsten Schritt wird das Gehäuse in entgegengesetzter Richtung relativ zur Welle verfahren bis zum Erreichen der zweiten Prüfkraft. Das Erreichen der zweiten Prüfkraft wird gleichermaßen von der Lampe signalisiert. Eine Kraftmessdose ermöglicht das kontinuierliche messen der aufgebrachten Kraft, welche durch eine Steuereinheit, umfassend einen Microcontroller, mit einem Schwellenwert abgeglichen wird. Bei Erreichen des Schwellenwerts (Prüfkraft), wird die Lampe durch die Steuereinheit angeschaltet.

In einer weiteren bevorzugten Ausgestaltung steuert und/oder regelt die Steuereinheit das Aufbringen der Kraft. So kann sie bspw. den Linearantrieb steuern und/oder regeln. Vorteilhaft wird der menschliche Einfluss minimiert, wodurch genauere Messergebnisse ermöglicht werden. Zudem bestehen vorteilhaft immer gleiche Versuchsdurchführungen unter gleichen Bedingungen, wodurch die Vergleichbarkeit zwischen Versuchen besonders gut ist.

In einer weiteren bevorzugten Ausführungsform der Erfindung ist die Vorrichtung dadurch gekennzeichnet, dass die Klemmvorrichtung auf die Gehäuselänge und den Gehäusedurchmesser einstellbar ist. Dies ermöglicht vorteilhaft das Angreifen einer Kraft an einem Zentrum der Längsachse der Welle. Die Vorrichtung ist dadurch vorteilhaft in der Lage für verschieden dimensionierte Prüfkörper ein Verfahren zur Messung der axialen Verschiebung bereitzustellen.

Die Klemmvorrichtung ist im Sinne der Erfindung bevorzugt so ausgestaltet, dass eine auf Schienen geführte Klemmbacke gegenüber einer positionsfest ausgestaltenden Klemmbacke, welches als Gegenstück fungiert, verstellbar ist. Das Gegenstück kann ebenfalls als wandähnliche Struktur ausgestaltet sein. Durch die Verstellung der auf Schienen geführten Klemmbacke kann die Klemmvorrichtung vorteilhaft auf die Gehäuselänge des Prüfkörpers eingestellt werden.

In einer weiteren Ausgestaltung sind beide Klemmbacken auf Schienen der Klemmvorrichtung geführt und verstellbar.

In einer bevorzugten Ausgestaltung weist die Vorrichtung mindestens eine Schraubklemme auf. Durch eine Schraubklemme wird die bewegliche Klemmbacke zwischen dem Gehäuse und der Schraubklemme festgestellt. In einer Ausführungsform ist die Schraubklemme dabei auf den Schienen der Klemmvorrichtung fest verankert. In einer weiteren Ausführungsform ist die Schraubklemme in einem Freiheitsgrad beweglich auf den Schienen der Klemmvorrichtung gelagert.

In einer weiteren bevorzugten Ausführungsform sind Klemmbacken austauschbar, sodass sie je nach Gehäusedurchmesser eines Prüfkörpers vorteilhaft angepasst werden können.

In einer weiteren bevorzugten Ausführungsform der Erfindung ist die Vorrichtung dadurch gekennzeichnet, dass das Messgerät eine Messuhr ist, bevorzugt eine Messuhr mit einem Stativ, wobei das Stativ an dem Gehäuse befestigbar ist. Die Verwendung einer Messuhr in der Vorrichtung erweist sich vorteilhaft als besonders wirtschaftlich.

In einer weiteren bevorzugten Ausführungsform der Erfindung ist die Vorrichtung dadurch gekennzeichnet, dass die Klemmvorrichtung in einem Freiheitsgrad auf einer Verfahreinrichtung gelagert ist, sodass sie in horizontaler Richtung verschiebbar ist. Das Aufweisen einer Verfahreinrichtung ermöglicht vorteilhaft die Aufbringung einer ersten und zweiten Kraft von nur einer Seite der Welle.

In einer weiteren bevorzugten Ausführungsform der Erfindung ist die Vorrichtung dadurch gekennzeichnet, dass die Vorrichtung ein Gestell umfasst mit einem Krafteinleitungspunkt und einem Verbindungsmittel zu einem ersten Ende der Welle, welche vertikal in Bezug auf den Durchmesser des Gehäuses und somit auf die vertikale Position der Zentralachse der Welle einstellbar sind. Durch diese Einstellung wird die Krafteinleitungsrichtung vorteilhaft in Axialrichtung ausgerichtet, womit nur eine axiale Last auf den Prüfkörper wirkt.

In einer weiteren bevorzugten Ausführungsform der Erfindung ist die Vorrichtung dadurch gekennzeichnet, dass die Vorrichtung ein Gestell umfasst mit einem ersten und zweiten Krafteinleitungspunkt und Verbindungsmittel für eine zentralaxiale Verbindung mit dem ersten und zweiten Ende der Welle, wobei die Krafteinleitungspunkten und Verbindungsmittel vertikal in Bezug auf den Durchmesser des Gehäuses und somit auf die vertikale Position der Zentralachse der Welle einstellbar sind. Durch diese Einstellung werden die Krafteinleitungsrichtungen ebenfalls in Axialrichtung ausgerichtet, womit nur eine axiale Last auf den Prüfkörper wirkt.

Die Verbindungsmittel zwischen Krafteinleitungspunkten des Gestells und Wellenenden, definieren die Kraftleitungsrichtung, welche vertikal in Bezug auf den Durchmesser des Gehäuses eingestellt werden. Anders ausgedrückt sind die Krafteinleitungsrichtungen stets parallel bzw. in Richtung der Längsachse der Welle ausgerichtet, wobei die vertikale Einstellbarkeit eine zentralaxiale Ausrichtung für verschiedene Durchmesser von zu prüfenden drehbar in einem Gehäuse gelagerten Wellen ermöglicht.

In einer weiteren bevorzugten Ausführungsform der Erfindung ist die Vorrichtung dadurch gekennzeichnet, dass die Vorrichtung zur Einleitung einer zentralaxialen Kraft auf das erste und zweite Ende der Welle, jeweils einen Hebelmechanismus aufweist, umfassend ein Drehgelenk und zwei Balken. Das Aufweisen eines Hebelmechanismus' ermöglicht eine einleitende Kraft in besonders simpler Form bereitzustellen. Dabei kann bevorzugt ausschließlich eine Gewichtskraft zum Aufbringen der Kraft genutzt werden, wodurch der Hebelmechanismus überaus energieeffizient ist.

### FIGUREN

Im Folgenden soll die Erfindung an Hand von Figuren näher erläutert werden, ohne auf diese beschränkt zu sein.

### Kurzbeschreibung der Abbildungen

- Fig. 1: Schematische Darstellung einer drehbar in einem Gehäuse gelagerten Welle, die in einer Klemmvorrichtung eingespannt ist und einseitig mit einem Gestell verbunden ist
- Fig. 2: Schematische Darstellung einer drehbar in einem Gehäuse gelagerten Welle, die in einer Klemmvorrichtung eingespannt ist, wobei beidseitig eine Kraft über jeweils einen Hebelmechanismus auf den Prüfkörper eingebracht wird
- Fig. 3: Schematische Darstellung einer drehbar in einem Gehäuse gelagerten Welle, die in einer Klemmvorrichtung eingespannt ist, wobei beidseitig eine Kraft auf den Körper eingebracht wird (ohne Hebelmechanismus)
- Fig. 4: Ausführungsform einer Prüfvorrichtung zur Messung der axialen Verschiebbarkeit von drehbar in einem Gehäuse gelagerten Wellen
- Fig. 5: Prüfvorrichtung und Prüfkörper zur Messung der axialen Verschiebbarkeit

### Detaillierte Beschreibung der Abbildungen

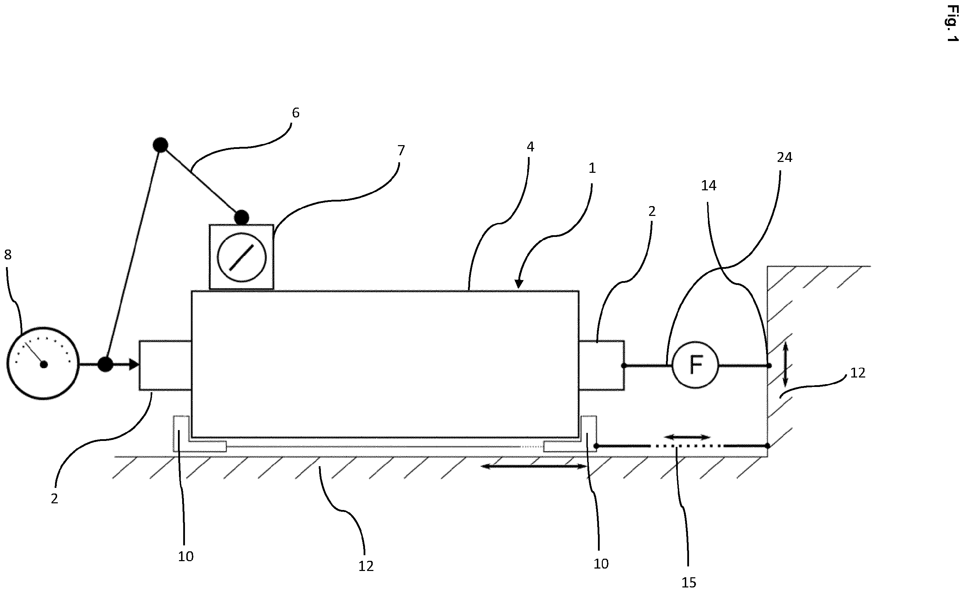

Fig. 1 ist eine schematische Darstellung einer drehbar in einem Gehäuse **4** gelagerten Welle **2,** die in einer Klemmvorrichtung umfassend zwei Klemmbacken **10** eingespannt ist und einseitig mit einem Gestell **12** verbunden ist. Die Klemmvorrichtung ist auf einem in einem Freiheitgrad auf Schienen beweglichen Schlitten gelagert und ist auf die Gehäuselänge einstellbar. Für die Messung der axialen Verschiebbarkeit ist an dem Gehäuse **4** ein Stativ **6** angebracht. Das Stativ **6** ist bevorzugt über einen Magneten **7** am Gehäuse befestigt. Das Stativ **6** stellt eine Halterung für eine Messuhr **8** dar. An einem Ende der Welle **2** ist eine Verbindung **24** zum Gestell **12** ausgestaltet. Die Verbindung **24** greift an einem Ende der Welle **2** und Krafteinleitungspunkt **14** des Gestells **12** an. Zudem ist in der Darstellung die Bewegungsrichtung **15** des Schlittens aufgezeigt. Je nach Bewegung des Schlittens wird eine Zug- oder Druckkraft an dem Ende der Welle **2** aufgebracht. Die Bewegung wird dabei so lange fortgesetzt bis eine vordefinierte Prüfkraft erreicht ist. Anschließend wird eine Bewegungsrichtung **15** in entgegengesetzter Richtung durchgeführt bis ebenfalls eine vordefinierte Prüfkraft erreicht ist. Die Messuhr **8** misst dabei die relative axiale Verschiebung der Welle **2** gegenüber ihrem Gehäuse **4.**

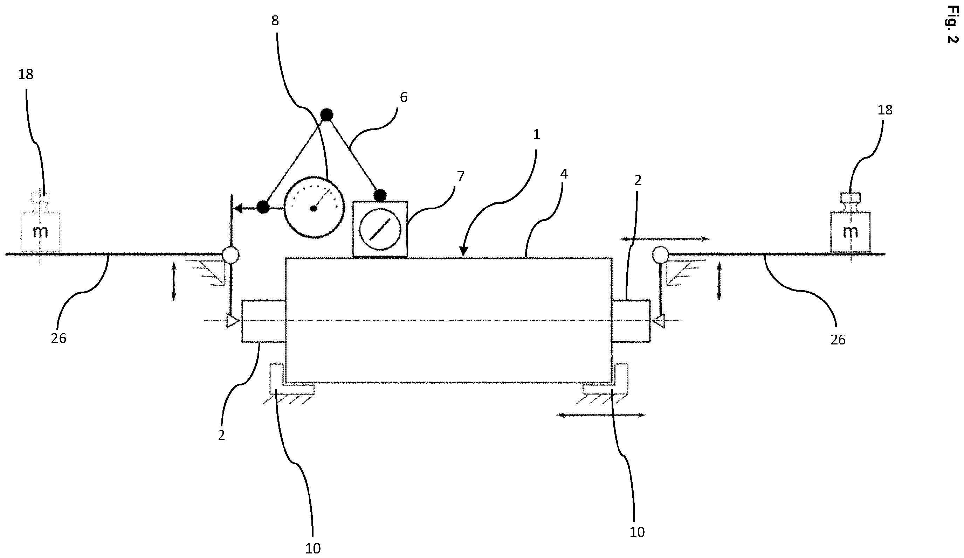

Fig. 2 ist eine schematische Darstellung einer weiteren bevorzugten Ausführungsform der Erfindung. Die drehbar in einem Gehäuse **4** gelagerten Welle **2** ist in einer Klemmvorrichtung eingespannt, wobei beidseitig eine Kraft über jeweils einen Hebelmechanismus **26** auf den Prüfkörper **1** eingebracht wird. Die Klemmbacken **10** der Klemmvorrichtung sind fest in einem Gestell **12** eingespannt und daher unbeweglich, wobei die Klemmvorrichtung auf die Gehäuselänge einstellbar ist. Die nötige Hebelkraft wird durch ein Gewicht **18** aufgebracht. Der Hebelmechanismus **26** lenkt die Gewichtskraft dabei so um, dass die Kraft in einer bevorzugten Krafteinleitungsrichtung (parallel bzw. in Richtung der Längsachse der Welle) jeweils an einem Wellenende angreifen kann. Ein Stativ **6** umfassend einen Magneten **7** dient zur Halterung einer Messuhr **8.** Das Stativ **6** ist dabei auf dem Gehäuse **8** angebracht und die Messuhr **8** ermittelt die axiale Verschiebung, wobei sich in dieser Ausführungsform die Welle **2** innerhalb des Gehäuses **4** bewegt.

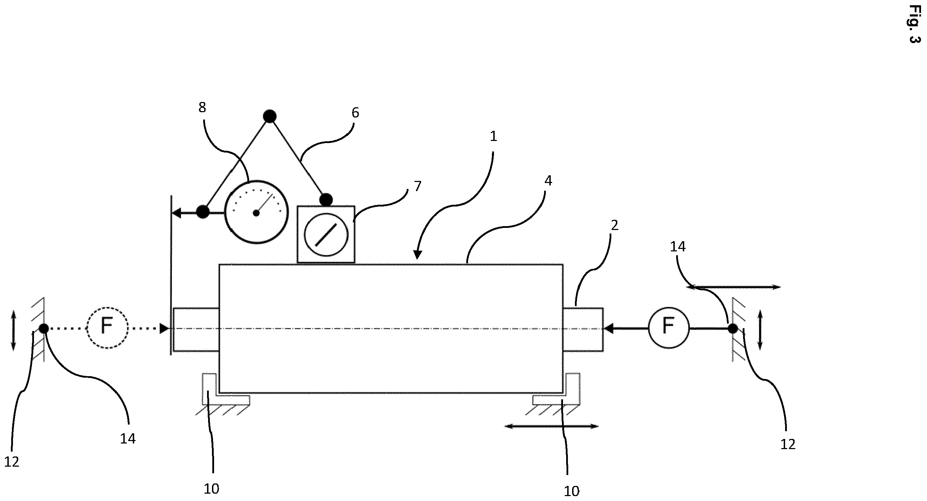

Fig. 3 ist eine schematische Darstellung einer weiteren bevorzugten Ausführungsform der Erfindung. Eine drehbar in einem Gehäuse **4** gelagerte Welle **2** ist in einer Klemmvorrichtung fest eingespannt. Die Klemmbacken **10** der Klemmvorrichtung sind hierbei fest in einem Gestell **12** gelagert. Wie in den vorherigen Ausführungsformen ist die Klemmvorrichtung auf die Gehäuselänge einstellbar. Eine Messuhr **8** wird über ein Stativ **6** gehalten, welches über einen Magneten **7** am Gehäuse **4** befestigt ist. Die Messuhr **8** dient zur Ermittlung der axialen Verschiebung. An beiden Wellenenden wird jeweils zeitlich versetzt eine Kraft in Krafteinleitungsrichtung eingebracht bis eine vordefinierte Prüfkraft erreicht ist. Wie in der Ausführungsform der Fig.2, bewegt sich die Welle **2** innerhalb des fest gelagerten Gehäuses **4.**

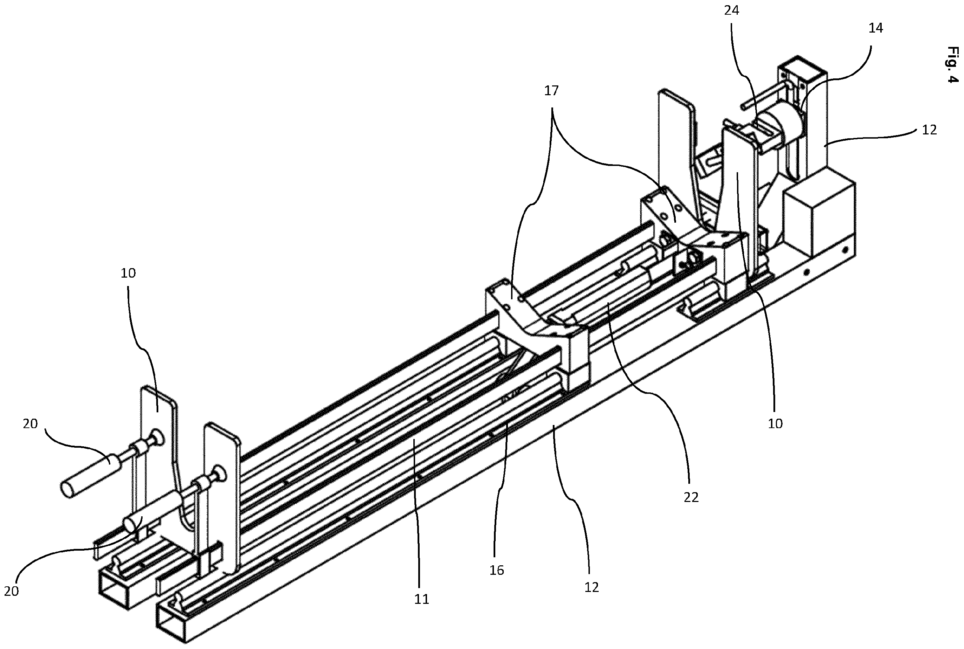

Fig. 4 zeigt eine Ausführungsform einer Prüfvorrichtung zur Messung der axialen Verschiebbarkeit von drehbar in einem Gehäuse **4** gelagerten Wellen **2.** Die Vorrichtung weist eine Klemmvorrichtung mit zwei Klemmbacken **10** auf. Zudem ist das Verbindungselement **24** für die Verbindung zwischen Welle **2** und Gestell **12** so ausgestaltet, dass es eine Kraftmessdose, ein elastisches Element und eine steif ausgebildete Gabel aufweist. Das Verbindungselement greift im Krafteinleitungspunkt **14** des Gestells **4** an und steht für die Aufnahme eines Wellenendes bereit. Ein Linearantrieb **22** ermöglicht die Bewegung eines Schlittens **17** auf Schienen **16.** Zwei Schraubklemmen **20** ermöglichen das Feststellen der Klemmbacke **10** gegen das Gehäuse **4** des Prüfkörpers, wobei die Schraubklemmen **20** und die anliegende Klemmbacke **10** auf den Schienen **11** der Klemmvorrichtung geführt werden.

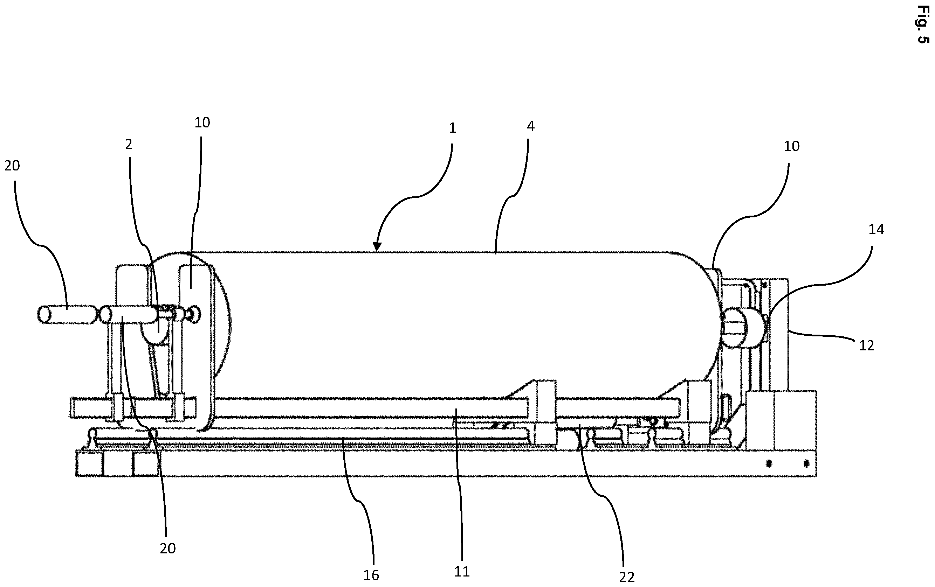

Fig. 5 zeigt die in Fig 4. dargestellte Prüfvorrichtung mit eingespannten Prüfkörper **1** zur Messung seiner axialen Verschiebbarkeit. Das Gehäuse **4** des Prüfkörpers ist zwischen den Klemmbacken **10** stirnseitig eingespannt. Zwei Schraubklemmen **20** fixieren dabei eine der beiden Klemmbacken **10** an dem Gehäuse **4.** Der Linearantrieb **22** setzt den Schlitten **17** auf dem der Prüfkörper **1** aufliegt entlang der Schienen **16** in Bewegung. Dabei wird eine Kraft am Verbindungselement **24** aufgebracht, welche durch eine Kraftmessdose gemessen werden kann.

### Bezugszeichenliste

- 1: Prüfkörper
- 2: Welle
- 4: Gehäuse
- 6: Stativ
- 7: Stativmagnet
- 8: Messuhr
- 10: Klemmbacke
- 11: Schienen der Klemmvorrichtung
- 12: Gestell
- 14: Krafteinleitungspunkt in das Gestell
- 15: Bewegungsrichtung des Schlittens
- 16: Schienen der Verfahreinrichtung
- 17: Schlitten der Verfahreinrichtung
- 18: Gewicht
- 20: Schraubklemme
- 22: Linearantrieb
- 24: Verbindungselement
- 26: Hebelmechanismus

## Patentansprüche

1. Verfahren zur Messung einer axialen Verschiebbarkeit einer drehbar in einem Gehäuse (4) gelagerten Welle (2) **dadurch gekennzeichnet, dass**
a) das Gehäuse (4) mit der drehbar gelagerten Welle (2) horizontal in einer Klemmvorrichtung eingeklemmt wird, wobei ein Messgerät vorliegt, um die axiale Position der Welle relativ zum Gehäuse zu messen,
b) Mittel für eine erste und dazu entgegensetzt ausgerichtete zweite Krafteinleitungsrichtung in Längsrichtung der Welle in Abhängigkeit des Gehäusedurchmessers auf die Zentralachse der Welle (2) eingestellt werden
c) entlang der ersten Krafteinleitungsrichtung eine erste Kraft an einem ersten Ende der Welle eingebracht wird bis eine erste Prüfkraft erreicht ist und
d) im Anschluss in entgegengesetzter Richtung entlang der zweiten Krafteinleitungsrichtung eine zweite Kraft eingebracht wird bis eine zweite Prüfkraft erreicht ist,
wobei das Messgerät die axiale Positionsveränderung der Welle (2) relativ zu dem Gehäuse (4) misst, um die axiale Verschiebbarkeit der Welle (2) gegenüber dem Gehäuse (4) zu bestimmen.

2. Verfahren gemäß dem vorherigen Anspruch
**dadurch gekennzeichnet, dass**
die erste Prüfkraft und die zweite Prüfkraft dem Betrage nach gleich sind.

3. Verfahren gemäß einem der vorherigen Ansprüche
**dadurch gekennzeichnet, dass**
bei Erreichen der ersten Prüfkraft das Messgerät auf die vorliegende axiale Position der Welle (2) relativ zum Gehäuse (4) genullt wird und die axiale Verschiebbarkeit der Welle (2) gegenüber dem Gehäuse (4) als absoluter Wert durch das Messgerät anhand der axialen Positionsveränderung bis zum Erreichen der zweiten Prüfkraft ermittelt wird.

4. Verfahren gemäß einem der vorherigen Ansprüche
**dadurch gekennzeichnet, dass**
die axiale Verschiebbarkeit der Welle (2) gegenüber dem Gehäuse (4) aus der Differenz der axialen Positionsveränderung der Welle (2) relativ zum Gehäuse (4) bei Erreichen der ersten Prüfkraft und der axialen Positionsveränderung der Welle (2) relativ zum Gehäuse (4) bei Erreichen der zweiten Prüfkraft ermittelt wird.

5. Verfahren gemäß einem der vorherigen Ansprüche
**dadurch gekennzeichnet, dass**
die Welle (2) über mindestens ein Wälzlager in dem Gehäuse (4) gelagert vorliegt.

6. Verfahren gemäß einem der vorherigen Ansprüche
**dadurch gekennzeichnet, dass**
das Messgerät eine Messuhr (8) ist, bevorzugt eine Messuhr mit einem Stativ (6), wobei das Stativ (6) an dem Gehäuse (8) befestigt wird.

7. Verfahren gemäß einem der vorherigen Ansprüche
**dadurch gekennzeichnet, dass**
die erste und zweite Krafteinleitungsrichtung durch eine Verbindung des ersten Endes der Welle (2) zu einem Gestell festgelegt wird, wobei das Gehäuse (4) in der Klemmvorrichtung entlang der Längsrichtung der Welle (2) mittels einer Verfahreinrichtung verschiebbar ist,
und die erste Prüfkraft sowie die zweite Prüfkraft durch eine Verschiebung des Gehäuses (4) gegenüber dem Gestell (12), und der dementsprechenden Zug- und Druckbelastung, an dem ersten Ende der Welle (2) aufgebracht wird.

8. Verfahren gemäß Anspruch 1 - 6
**dadurch gekennzeichnet, dass**
die erste Krafteinleitungsrichtung durch eine zentralaxiale Verbindung des ersten Endes der Welle (2) mit einem ersten Krafteinleitungspunkt (14) eines Gestells (12) und die zweite Krafteinleitungsrichtung durch eine zentralaxiale Verbindung des zweiten Endes der Welle (2) mit einem zweiten Krafteinleitungspunkt (14) des Gestells (12) festgelegt wird, wobei das Gehäuse (4) in der Klemmvorrichtung gegenüber dem Gestell (12) fixierbar vorliegt und
die erste Prüfkraft sowie die zweite Prüfkraft durch die Aufbringen der Prüfkraft über die jeweiligen Krafteinleitungspunkte (14) des Gestells (12) erfolgt.

9. Verfahren gemäß Anspruch 1 - 6
**dadurch gekennzeichnet, dass**
die erste und/oder zweite Kraft über einen Hebelmechanismus (26) eingebracht werden.

10. Vorrichtung zur Messung einer axialen Verschiebbarkeit einer drehbar in einem Gehäuse (4) gelagerten Welle (2), bevorzugt für ein Verfahren gemäß einem der vorherigen Ansprüche
**dadurch gekennzeichnet, dass**
die Vorrichtung eine Klemmvorrichtung für eine horizontale Lagerung des Gehäuses (4) mit der drehbar gelagerten Welle (2) und ein Messgerät zur Bestimmung der axialen Position der Welle (2) relativ zum Gehäuse (4) aufweist,
wobei die Vorrichtung Mittel umfasst zur Einbringung einer ersten und dazu entgegensetzt ausgerichteten zweiten Krafteinleitungsrichtung auf die Zentralachse der Welle (2), welche in Abhängigkeit des Gehäusedurchmessers einstellbar sind.

11. Vorrichtung gemäß dem vorherigen Anspruch,
**dadurch gekennzeichnet, dass**
die Klemmvorrichtung auf die Gehäuselänge und/oder den Gehäusedurchmesser einstellbar ist.

12. Vorrichtung gemäß einem der vorherigen Ansprüche 10 oder 11
**dadurch gekennzeichnet, dass**
die Klemmvorrichtung in einem Freiheitsgrad auf einer Verfahreinrichtung gelagert ist, sodass sie in horizontaler Richtung verschiebbar ist.

13. Vorrichtung gemäß einem der vorherigen Ansprüche 10 bis 12
**dadurch gekennzeichnet, dass**
die Vorrichtung ein Gestell umfasst mit einem Krafteinleitungspunkt (14) und einem Verbindungsmittel zu einem ersten Ende der Welle (2), welche vertikal in Bezug auf den Durchmesser des Gehäuses (4) und somit auf die vertikale Position der Zentralachse der Welle (2) einstellbar ist.

14. Vorrichtung gemäß einem der vorherigen Ansprüche 10 bis 12
**dadurch gekennzeichnet, dass**
die Vorrichtung ein Gestell (4) umfasst mit einem ersten und zweiten Krafteinleitungspunkt (14) und Verbindungsmittel für eine zentralaxiale Verbindung mit dem ersten und zweiten Ende der Welle (2), wobei die Krafteinleitungspunkte (14) und Verbindungsmittel vertikal in Bezug auf den Durchmesser des Gehäuses (4) und somit auf die Position der Zentralachse der Welle (2) einstellbar sind.

15. Vorrichtung gemäß einem der vorherigen Ansprüche 11 bis 14
**dadurch gekennzeichnet, dass**
die Vorrichtung zur Einleitung einer zentralaxialen Kraft auf das erste und zweite Ende der Welle (2), jeweils einen Hebelmechanismus (26) aufweist, umfassend ein Drehgelenk und zwei Balken.
